Europäisches Patentamt

European Patent Office

Office européen des brevets

(11) Publication number: **0 420 411 A1**

# EUROPEAN PATENT APPLICATION

(21) Application number: 90309275.7

(51) Int. Cl.⁵: **A23G 3/30**

(22) Date of filing: 23.08.90

(30) Priority: 28.09.89 US 413798

(43) Date of publication of application:
03.04.91 Bulletin 91/14

(84) Designated Contracting States:
BE CH DE DK ES FR GB GR IT LI NL SE

(71) Applicant: WARNER-LAMBERT COMPANY
201 Tabor Road
Morris Plains New Jersey 07950(US)

(72) Inventor: Cherukuri, Subraman Rao
10 Jean Drive
Towaco, New Jersey 07082(US)
Inventor: Raman, Krishna P.
5 Marre Drive
Randolph, New Jersey 07869(US)

(74) Representative: Jones, Michael Raymond et al
HASELTINE LAKE & CO. Hazlitt House 28
Southampton Buildings Chancery Lane
London WC2A 1AT(GB)

(54) Fructose sweetened chewing gum compositions and processes for preparing the same.

(57) The present invention pertains to an anhydrous chewing gum composition which comprises in percentages by weight of the chewing gum composition (a) a gum base present in an amount up to about 55%, (b) a bulk sweetening agent comprising pulverized fructose having a particle size capable of passing through a 60 mesh screen present in an amount from about 35% to about 90%, and (c) an effective amount of a flavoring agent. In another embodiment, the invention pertains to an anhydrous reduced-calorie chewing gum composition which comprises in percentages by weight of the chewing gum composition (a) a gum base having an enhanced hydrophilic character present in an amount from about 55% to about 90%, (b) a bulk sweetening agent comprising pulverized fructose having a particle size capable of passing through a 60 mesh screen present in an amount up to about 45%, and (c) an effective amount of a flavoring agent.

EP 0 420 411 A1

# FRUCTOSE SWEETENED CHEWING GUM COMPOSITIONS AND METHODS FOR PREPARING SAME

## BACKGROUND OF THE INVENTION

This application is a continuation-in-part of application serial no. 291,708, filed December 29, 1988.

### 1. Field of the Invention

This invention pertains to anhydrous chewing gum compositions having enhanced flavor, increased rate of flavor and sweetness perception, longer flavor and sweetness duration and better up-front sweetness. More particularly, this invention pertains to chewing gum compositions comprising a gum base, a bulk sweetening agent comprising pulverized fructose having a particle size capable of passing through a 60 mesh screen, and a flavoring agent. The fructose sweetened chewing gum compositions may be utilized in a wide variety of chewing gum products. This invention also pertains to methods for preparing these fructose sweetened compositions and the chewing gum products in which they may be employed.

### 2. Description of the Prior Art

Fructose syrup (high fructose corn syrup) can be prepared by hydrogenation of sucrose solution to prepare an invert sugar or by treating dextrose with an isomerase enzyme or alkali. Such methods provide syrups usually containing less than about 50% fructose on a dry solids basis (d.s.b.) Other methods are known to increase the concentration of fructose in the syrup up to about 90% d.s.b. as well as to prepare fructose in crystalline form.

Fructose is one of the sweetest sugar bulking agents known having a sweetness intensity of about 132% that of sugar (sucrose). Fructose is a known flavor enhancer, and when used as a bulk sweetening agent in chewing gums, provides a cleaner, more pleasant taste and mouth feel, up-front sweetness, soft chew texture, and an improved rate of flavor and sweetness duration when compared to similar compositions employing other bulk sweetening agents. The sweetness intensity of fructose provides the means to prepare edible compositions having a sweetness intensity equivalent to that of sucrose sweetened compositions but containing less bulk sweetening agent and hence fewer calories.

Fructose is a humectant and when used in combination with an aqueous softening agent, generally results in edible compositions which absorb ambient moisture under storage conditions. Consequently, fructose-sweetened products tend to suffer from moisture-related degradation problems and tend to soften and stick to the wrapper. Fructose in crystalline form imparts a gritty mouth feel when used as a bulk sweetening agent in chewing gums.

United States patent no. 4,581,234, issued to Cherukuri et al. and assigned to Warner-Lambert Company, discloses anhydrous chewing gum compositions which have resistance to moisture absorption. These anhydrous gums employ a gum base containing a soft polyvinyl acetate (PVA) elastomer.

United States patent application serial no. 939,918, filed December 10, 1986, issued to Cherukuri et al. and assigned to Warner-Lambert Company, discloses reduced calorie chewing gums wherein soft polyvinyl acetate containing gum bases having an enhanced hydrophilic character are employed in amounts greater than about 50% in combination with up to about 0.60% of an intense sweetening agent and up to about 40% of a bulk sweetening agent. The gum bases are employed in major quantities to reduce the caloric content of the gums. The presence of the intense sweetening agent permits the level of bulk sweetening agent to be reduced from conventional levels without a sacrifice in product sweetness.

United States patent no. 4,698,223, issued to Perfetti et al. and assigned to Gum Base Co., SPA, discloses a no-calorie chewing gum composition which comprises from 92% to 99% of a gum base, up to 4% of glycerol, and up to 3% of a flavoring agent. The gum base comprises from 8% to 15% of an elastomer, from 10% to 30% of a hydrogenated or partially hydrogenated animal or vegetable oil, from 10% to 39% of an inert mineral filler, from 8% to 25% of polyvinyl acetate, from 4% to 9% of fatty acid glycerides, from 15% to 25% of resins, from 2% to 6% of natural gum, from 4% to 12% of wax and up to 0.05% of antioxidants.

United States patent no. 4,271,199, issued to Cherukuri et al. and assigned to Life Savers, Inc., discloses a sugar-containing chewing gum which contains a premixed recrystallized combination of liquid and solid sweetening agents which may be a mixture of fructose syrup and sucrose.

United States patent no. 4,271,198, issued to Cherukuri et al. and assigned to Life Savers, Inc., discloses a chewing gum which contains a gum base, a bulk sweetening agent, and from about 5% to about 25% by weight of a liquid moisturizer which may be a high fructose corn syrup.

United States patent no. 4,409,244, issued to Cherukuri et al. and assigned to Nabisco Brands, Inc., discloses a chewing gum which contains a gum base, sugar, and from about 8% to about 30% by weight of pure fructose syrup as a humectant.

United States patent no. 4,676,991, issued to Batterman et al. and assigned to A.E. Staley Manufacturing Company, discloses a monosaccharide and disaccharide based sweetener composition which consists essentially of a blend of fructose and sucrose.

United States patent no. 4,634,472, issued to Niekamp et al. and assigned to A.E. Staley Manufacturing Company, discloses a crystallization process for preparing an enriched fructose syrup in which the fructose content of the enriched syrup is at least 1.1 times greater than that of the fructose content of the initial fructose syrup.

United States patent no. 4,151,270, issued to Ream et al. and assigned to Wm. Wrigley Jr. Company, discloses a saliva stimulating chewing gum composition comprising a gum base, a sweetening agent, a flavoring agent and a mixture of at least 3% of an organic acid and at least 10% of fructose to promote salivation.

Thus, a variety of fructose sweetened chewing gum compositions are known which have improved texture, as well as improved sweetness and flavor intensities, compared to sucrose sweetened chewing gums. There is still a need, however, for gum compositions which employ fructose as the sole bulk sweetening agent to provide gums having a cleaner, more pleasant taste and mouth feel, up-front sweetness, soft chew texture, and improved rate of flavor and sweetness duration. The present invention provides such improved fructose sweetened gum compositions having improved organoleptic properties without the disadvantages associated with conventional fructose sweetened compositions.

## SUMMARY OF THE INVENTION

The present invention pertains to an anhydrous chewing gum composition which comprises in percentages by weight of the chewing gum composition (a) a gum base present in an amount up to about 55%, (b) a bulk sweetening agent comprising pulverized fructose having a particle size capable of passing through a 60 mesh screen present in an amount from about 35% to about 90%, and (c) an effective amount of a flavoring agent. In another embodiment, the invention pertains to an anhydrous reduced-calorie chewing gum composition which comprises in percentages by weight of the chewing gum composition (a) a gum base having an enhanced hydrophilic character present in an amount from about 55% to about 90%, (b) a bulk sweetening agent comprising pulverized fructose having a particle size capable of passing through a 60 mesh screen present in an amount up to about 45%, and (c) an effective amount of a flavoring agent. The fructose sweetened chewing gum compositions may be utilized in a wide variety of chewing gum products. This invention also relates to methods for preparing these fructose sweetened compositions and the chewing gum products in which they may be employed.

## BRIEF DESCRIPTION OF THE DRAWING

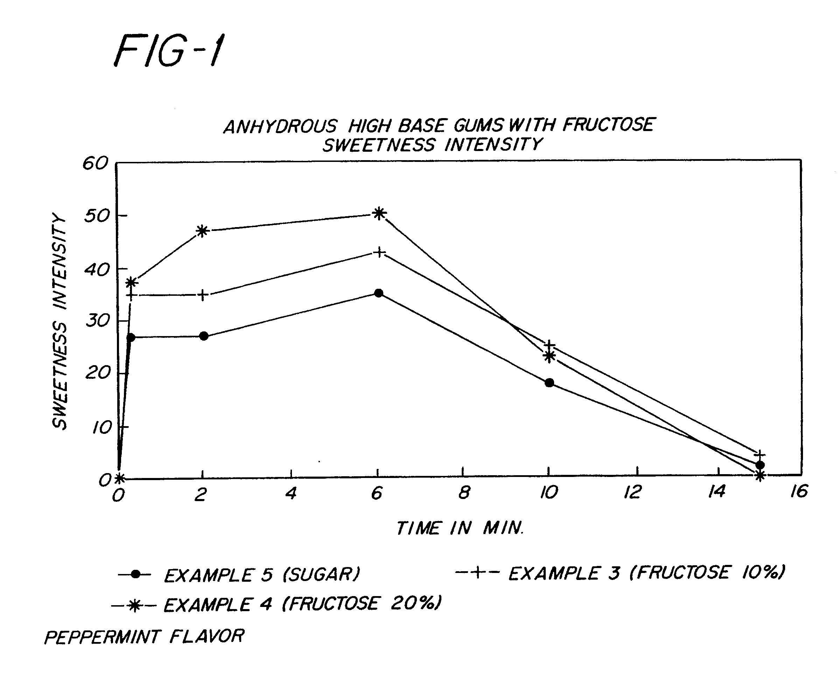

FIGURE 1 depicts in graphic format the sweetness intensities found for compositions containing pulverized fructose having a particle size capable of passing through a 60 mesh screen and sugar (control) (Examples 3-5).

## DETAILED DESCRIPTION OF THE INVENTION

The present invention pertains to an anhydrous chewing gum composition which comprises in percentages by weight of the chewing gum composition (a) a gum base present in an amount up to about 55%, (b) a bulk sweetening agent comprising pulverized fructose having a particle size capable of passing through a 60 mesh screen present in an amount from about 35% to about 90%, and (c) an effective amount of a flavoring agent. In another embodiment, the invention pertains to an anhydrous reduced-calorie chewing gum composition which comprise in percentages by weight of the chewing gum composition (a) a gum base having an enhanced hydrophilic character present in an amount from about 55% to about 90%, (b) a bulk sweetening agent comprising pulverized fructose having a particle size capable of passing through a 60 mesh screen present in an amount up to about 45%, and (c) an effective amount of a flavoring agent.

The chewing gum compositions of the present invention are anhydrous gum compositions. More particularly, the anhydrous gum compositions have a moisture (water) content of up to about 1.0%, preferably up to about 0.6%, and more preferably up to about 0.3%, by weight of the total gum composition. Ingredients which provide a greater moisture content, such as aqueous softeners, are not employed in the present composition. Accordingly the inventive fructose sweetened gum compositions do not suffer from moisture degradation and moisture absorption related problems. Non-anhydrous chewing gum compositions generally have a moisture content between about 1% and about 10%, by weight of the final chewing gum composition. Bulk sweetening agents such as fructose are unsuitable for use with these compositions because these gums would be subject to moisture related problems.

The reduced-calorie chewing gums of the present invention have a caloric content of less than about one third (1/3), and preferably less than about one half (1/2), that of conventional sugar and sugarless chewing gums, which have a caloric content of about three to four calories per gram.

As set above, the bulk sweetening agent in the present invention is pulverized fructose having a particle size capable of passing through a 60 mesh screen (60 mesh particle size). Pulverized fructose having a 60 mesh particle size can be prepared by pulverizing (milling, powdering) commercially available crystalline fructose by any conventional means known to those skilled in the art. For example, crystalline fructose may be pulverized in a high speed pulverizer such as a Fitzpatrick mill. The optimal speed of the machine and the screen used therein may vary depending upon the type of pulverizing machine used, but such variations are readily determined by those skilled in the art without the need for undue experimentation to obtain the desired particle size. A suitable form of fructose in crystalline form is that distributed under the tradename Crystalline Fructose, manufactured by A. E. Staley Manufacturing Company, Decatur, Ill.

A comparison of the particle size distribution of crystalline fructose and pulverized fructose having a 60 mesh particle size is set out in Table 1.

TABLE 1

| SCREEN ANALYSIS* OF CRYSTALLINE AND PULVERIZED FRUCTOSE | | |
|---|---|---|
| Particle size | Crystalline Fructose | Pulverized Fructose |
| 40 Mesh | 20.62% | 0.00% |
| 60 Mesh | 57.10% | 0.00% |
| 80 Mesh | 15.35% | 97.00% |
| Pan | 6.95% | 3.00% |

* Percentage remaining on screen

When pulverized fructose having a 60 mesh particle size is used as the bulk sweetening agent in a chewing gum composition, the resulting chewing gum is about 20% sweeter than equivalent compositions sweetened with crystalline fructose. Such fructose sweetened chewing gums are also significantly sweeter than equivalent compositions sweetened with other bulk sweetening agents. The fructose sweetened gums of the present invention have enhanced flavor, an increased rate of flavor and sweetness perception, longer flavor and sweetness duration, and better up-front sweetness. While not wishing to be bound by theory, applicants believe that pulverized fructose is released more readily from the chewing gum matrix than crystalline fructose when chewed and hence is more available to provide sweetness and flavor enhancement.

In general, the amount of bulk sweetening agent comprising pulverized fructose having a 60 mesh particle size employed in the final chewing gum composition will vary with the desired amount of sweetness and the caloric content selected for a particular chewing gum composition. The total amount of bulk sweetening agent should be a quantity sufficient to provide discontinuity to the gum base. The amount of bulk sweetening agent present in a chewing gum composition containing traditional quantities of a gum base, i.e., gum base present in an amount up to about 55%, will normally be from about 35% to about 90%, more preferably from about 45% to about 85%, and most preferably from about 55% to about 85%, by weight of the final chewing gum composition. The amount of bulk sweetening agent present in a reduced-calorie chewing gum composition containing a major quantity of a gum base having an enhanced hydrophilic character, i.e., gum base present in an amount from about 55% to about 90%, will normally be in an amount up to about 45%, preferably from about 5% to about 40%, and most preferably from about 5% to about 25%, by weight of the final chewing gum composition.

The present invention includes an improved chewing gum composition incorporating the inventive fructose composition and a method for preparing the improved gum composition, including both chewing gum and bubble gum formulations. Chewing gum formulations employing the inventive composition will vary greatly depending upon various factors such as the type of gum base used, the consistency desired, and the other components employed to prepare the final composition. In general, the improved chewing gum compositions will contain a gum base, an effective amount of the inventive fructose composition, and various additives such as a flavoring agent. The fructose-sweetened chewing gums can be made into a variety of products, e.g., sticks, slabs, chunks, balls, ropes, tablets, center-filled products, and the like.

In general, the amount of gum base present in the gum composition will be from about 5% to about 95%, by weight of the final chewing gum composition. Chewing gum compositions containing traditional levels of a gum base (when a reduced-calorie product is not desired) will normally comprise a gum base present in an amount up to about 55%, preferably from about 10% to about 40%, and more preferably from about 10% to about 30%, by weight of the chewing gum composition. Reduced-calorie chewing gum compositions employing a major quantity of a chewing gum base having an enhanced hydrophilic character will normally comprise a gum base present in an amount from about 55% to about 95%, preferably from about 60% to about 90%, and more preferably from about 65% to about 85%, by weight of the chewing gum composition.

As used herein, the term "reduced-calorie composition" means a composition having a caloric value two thirds or less than that of a conventional composition. The term "tight" or "rubbery" chew refers to a chewing gum composition which requires a large amount of muscular chewing effort to masticate or to a composition which provides a gum bolus with high elasticity and bounce and which is difficult to deform.

Gum bases having an enhanced hydrophilic character include polyvinyl acetate gum bases which may also contain a low melting point wax. Such gum bases do not require a high level of bulking agent to plasticize the gum base and render it soft during chewing. These gum bases may be used at higher than traditional levels, i.e., in major quantities, in chewing gum compositions in place of a bulking agent or a bulk sweetening agent to prepare high gum base-low bulking agent reduced-calorie gums which do not have rubbery or tight chew characteristics. These gum bases possess increased hydrophilic properties over traditional gum bases and appear to increase in size during chewing releasing flavoring and sweetening agents which would normally be entrapped in the gum base while maintaining a soft chew texture. Reduced-calorie chewing gum compositions prepared with such gum bases, having increased hydrophilic properties, in high levels are less hygroscopic (have lower moisture-pickup properties) and are less prone to becoming stale than conventional reduced-calorie gum compositions while having comparable firmness and texture.

Chewing gum compositions employing a major quantity of a chewing gum base having an enhanced hydrophilic character are more fully described in United States patent application serial no. 939,918, filed December 10, 1986, which disclosure is incorporated herein by reference.

In one embodiment, the invention pertains to a reduced-calorie chewing gum composition which comprises (A) a gum base present in an amount from about 55% to about 90%, by weight of the chewing gum composition, which comprises (a) an elastomer present in an amount from about 0.5% to about 20%, by weight of the gum base, (b) a medium molecular weight polyvinyl acetate polymer having a molecular weight from about 35,000 to about 55,000 present in an amount from about 10% to about 25%, by weight of the gum base, (c) an acetylated monoglyceride present in an amount from about 4.5% to about 10%, by weight of the gum base, (d) a wax having a melting point below about 60° C. present in an amount from about 6% to about 10%, by weight of the gum base, and (e) a material selected from the group consisting of elastomer solvents, emulsifiers, plasticizers, fillers, and mixtures thereof, present in an amount to bring the total amount of gum base to 100%, by weight of the gum base, and (B) a bulk sweetening agent comprising pulverized fructose having a particle size capable of passing through a 60 mesh screen present in an amount up to about 45%, and (c) an effective amount of a flavoring agent.

The elastomers (rubbers) employed in the gum base of the present invention will vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing gums and bubble gums. Illustrative examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, gutta percha, lechi capsi, sorva, gutta kay, and the like, and mixtures thereof. Examples of synthetic elastomers include, without limitation, styrene-butadiene copolymers (SBR), polyisobutylene, isobutylene-isoprene copolymers, polyethylene, and the like, and mixtures thereof.

The amount of elastomer employed in the gum base will vary greatly depending upon various factors such as the type of gum base used, the consistency of the gum composition desired and the other components used in the composition to make the final chewing gum product. In general, the elastomer will be present in the gum base in an amount from about 0.5% to about 20%, and preferably from about 2.5% to about 15%, by weight of the gum base.

The polyvinyl acetate polymer employed in the gum base of the present invention is a polyvinyl acetate polymer having a medium molecular weight, specifically, having a mean average molecular weight in the range from about 35,000 to about 55,000. This medium molecular weight polyvinyl acetate polymer will preferably have a viscosity from about 35 seconds to about 55 seconds (ASTM designation D1200-82 using a Ford cup viscometer procedure). The medium molecular weight polyvinyl acetate polymer will be present in the gum base in an amount from about 10% to about 25%, and preferably from about 12% to about 27%, by weight of the gum base.

The medium molecular weight polyvinyl acetate polymer may also be blended with a low molecular weight polyvinyl acetate polymer. The low molecular weight polyvinyl acetate polymer will have a mean average molecular weight in the range from about 12,000 to about 16,000. This low molecular weight polyvinyl acetate polymer will preferably have a viscosity from about 14 seconds to about 16 seconds (ASTM designation D1200-82 using a Ford cup viscometer procedure). The low molecular weight polyvinyl acetate polymer will be present in the gum base in an amount up about 17%, and preferably from about 12% to about 17%, by weight of the gum base.

When a low molecular weight polyvinyl acetate polymer is blended with a medium molecular weight polyvinyl acetate polymer, the polymers will be present in a mole ratio from about 1:0.5 to about 1:1.5, respectively.

The medium molecular weight polyvinyl acetate polymer may also be blended with a high molecular weight polyvinyl acetate polymer. The high molecular weight polyvinyl acetate polymer will have a mean average molecular weight in the range from about 65,000 to about 95,000. The high molecular weight polyvinyl acetate polymer will be present in the gum base in an amount up to about 5%, by weight of the gum base.

The acetylated monoglycerides in the present invention, like the polyvinyl acetate polymer, serve as plasticizing agents. While the saponification value of the acetylated monoglycerides is not critical, preferable saponification values are 278 to 292, 316 to 331, 370 to 380, and 430 to 470. A particularly preferred acetylated monoglyceride has a saponification value above about 400. Such acetylated monoglycerides generally have an acetylation value (percentage acetylated) above about 90 and a hydroxyl value below about 10 (Food Chemical Codex (FCC) III/P508 and the revision of AOCS).

The use of acetylated monoglycerides in the present gum base is preferred over the use of bitter polyvinyl acetate (PVA) plasticizers, in particular, triacetin. The acetylated monoglycerides will be present in the gum base in an amount from about 4.5% to about 10%, and preferably from about 5% to about 9%, by weight of the gum base.

The wax in the gum base of the present invention softens the polymeric elastomer mixture and improves the elasticity of the gum base. The waxes employed will have a melting point below about 60° C., and preferably between about 45° C. and about 55° C. A preferred wax is low melting paraffin wax. The wax will be present in the gum base in an amount from about 6% to about 10%, and preferably from about 7% to about 9.5%, by weight of the gum base.

In addition to the low melting point waxes, waxes having a higher melting point may be used in the gum base in amounts up to about 5%, by weight of the gum base. Such high melting waxes include beeswax, vegetable wax, candelilla wax, carnuba wax, most petroleum waxes, and the like, and mixtures thereof.

In addition to the components set out above, the gum base includes a variety of traditional ingredients, such as a component selected from the group consisting of elastomer solvents, emulsifiers, plasticizers, fillers, and mixtures thereof. These ingredients are present in the gum base in an amount to bring the total amount of gum base to 100%.

The gum base may contain elastomer solvents to aid in softening the elastomer component. Such elastomer solvents may comprise those elastomer solvents known in the art, for example, terpinene resins such as polymers of alpha-pinene or beta-pinene, methyl, glycerol and pentaerythritol esters of rosins and modified rosins and gums, such as hydrogenated, dimerized and polymerized rosins, and mixtures thereof. Examples of elastomer solvents suitable for use herein include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum base in amounts from about 2% to about 15%, and preferably from about 7% to about 11%, by weight of the gum base.

The gum base may also include emulsifiers which aid in dispersing the immiscible components into a single stable system. The emulsifiers useful in this invention include glyceryl monostearate, lecithin, fatty acid monoglycerides, diglycerides, propylene glycol monostearate, and the like, and mixtures thereof. A preferred emulsifier is glyceryl monostearate. The emulsifier may be employed in amounts from about 2% to about 15%, and preferably from about 7% to about 11%, by weight of the gum base.

The gum base may also include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base. The plasticizers and softeners are generally employed in the gum base in amounts up to about 20%, and preferably in amounts from about 9% to about 17%, by weight of the gum base.

Preferred plasticizers are the hydrogenated vegetable oils and include soybean oil and cottonseed oil which may be employed alone or in combination. These plasticizers provide the gum base with good texture and soft chew characteristics. These plasticizers and softeners are generally employed in amounts from about 5% to about 14%, and preferably in amounts from about 5% to about 13.5%, by weight of the gum base.

In another preferred embodiment, the softening agent is anhydrous glycerin, such as the commercially available United States Pharmacopeia (USP) grade. Glycerin is a syrupy liquid with a sweet warm taste and has a sweetness of about 60% of that of cane sugar. Because glycerin is hygroscopic, it is important that the anhydrous glycerin be maintained under anhydrous conditions throughout the preparation of the chewing gum composition.

The gum base of this invention may also include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, tricalcium phosphate, dicalcium phosphate, and the like, and mixtures thereof. These fillers or adjuvants may be used in the gum base compositions in various amounts. Preferably the amount of filler, when used, will be present in an amount from about 15% to about 40%, and preferably from about 20% to about 30%, by weight of the gum base.

A variety of traditional ingredients may be optionally included in the gum base in effective amounts such as coloring agents, antioxidants, preservatives, flavoring agents, and the like. For example, titanium dioxide and other dyes suitable for food, drug and cosmetic applications, known as F. D. & C. dyes, may be utilized. An anti-oxidant such as butylated hydroxytoluene (BHT), butylated hydroxyanisole (BHA), propyl gallate, and mixtures thereof, may also be included. Other conventional chewing gum additives known to one having ordinary skill in the chewing gum art may also be used in the gum base.

The manner in which the gum base components are admixed is not critical and is performed using standard techniques and apparatus known to those skilled in the art. In a typical method, an elastomer is admixed with an elastomer solvent and/or a plasticizer and/or an emulsifier and agitated for a period of from 1 to 30 minutes. After blending is complete, the polyvinyl acetate component is admixed into the mixture. The medium molecular weight polyvinyl acetate is preferably admixed prior to addition of the optional low molecular weight polyvinyl acetate to prevent the creation of pockets of polyvinyl acetate within the elastomer mixture. The remaining ingredients, such as the low melting point wax, are then admixed, either in bulk or incrementally, while the gum base mixture is blended again for 1 to 30 minutes.

Other gum bases having an enhanced hydrophilic character and suitable for use in reduced-calorie chewing gum compositions in major quantities may also be employed in the present invention. In general, these gum bases may be employed in amounts up to about 99%, preferably from about 40% to about 85%, and more preferably from about 40% to about 75%, by weight of the chewing gum composition. Suitable gum bases having an enhanced hydrophilic character include, for example, those disclosed in United States patent no. 4,698,223, which disclosure is incorporated herein by reference. The gum base is formulated with the inventive fructose composition and conventional additives such as a flavoring agent to prepare a wide variety of sweetened chewing gum compositions.

The amount of gum base employed in the chewing gum composition will vary depending on such factors as the type of gum base used, the consistency desired, and the other components used to make the final chewing gum product. In general, the gum base having an enhanced hydrophilic character will be present in the reduced-calorie chewing gum composition in an amount from about 55% to about 90%, preferably from about 60% to about 90%, and more preferably from about 65% to about 85%, by weight of the chewing gum composition.

In another embodiment, the invention pertains to a chewing gum composition which contains traditional quantities of a chewing gum base, i.e., gum base present in an amount up to about 55%, preferably from about 10% to about 40%, and more preferably from about 10% to about 30%, by weight of the chewing gum composition. In this embodiment, the gum base will comprise an elastomer and a variety of traditional ingredients such as an elastomer solvent, waxes, emulsifiers, plasticizers or softeners, bulking agents such as mineral adjuvants which may serve as fillers and textural agents, coloring agents, antioxidants, preservatives, flavoring agents, and the like, and mixtures thereof. Illustrative examples of these gum base components have been set out above.

Once prepared, the traditional or enhanced hydrophilic character gum base may be admixed with pulverized fructose having a particle size capable of passing through a 60 mesh screen and conventional additives such as a flavoring agent to prepare a wide variety of chewing gum compositions.

The gum composition may include effective amounts of conventional additives selected from the group consisting of plasticizers, softeners, emulsifiers, waxes, fillers, mineral adjuvants, flavoring agents (flavors, flavorings), coloring agents (colorants, colorings), antioxidants, acidulants, thickening agents, and the like, and mixtures thereof. These ingredients are present in the chewing gum composition in an amount to bring the total amount of chewing gum composition to 100%. Some of these additives may serve more than one purpose. For example, in sugarless gum compositions, a sweetening agent, such as sorbitol or other sugar alcohol, may also function as a bulking agent.

The plasticizers, softening agents, mineral adjuvants, waxes and antioxidants discussed above, as being suitable for use in the gum base, may also be used in the chewing gum composition. Examples of other conventional additives which may be used include emulsifiers, such as lecithin and glyceryl monostearate, thickening agents, used alone or in combination with other softeners, such as methyl cellulose, alginates, carrageenan, xanthan gum, gelatin, carob, tragacanth, and locust bean, acidulants such as malic acid, adipic acid, citric acid, tartaric acid, fumaric acid, and mixtures thereof, and fillers, such as those discussed above under the category of mineral adjuvants.

The flavoring agents which may be used include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, and fruit essences including apple, pear, peach, grape, strawberry, raspberry, cherry, plum, pineapple, apricot and so forth. These flavoring agents may be used in liquid or solid form and may be used individually or in admixture. Commonly used flavors include mints such as peppermint, menthol, artificial vanilla, cinnamon derivatives, and various fruit flavors, whether employed individually or in admixture.

Other useful flavorings include aldehydes and esters such as cinnamyl acetate, cinnamaldehyde, citral diethylacetal, dihydrocarvyl acetate, eugenyl formate, p-methylamisol, and so forth may be used. Generally any flavoring or food additive such as those described in Chemicals Used in Food Processing, publication 1274, pages 63-258, by the National Academy of Sciences, may be used.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e, melonal (melon), 2,6-dimethyloctanal (green fruit), and 2-dodecenal (citrus, mandarin), cherry, grape, strawberry shortcake, mixtures thereof and the like.

The flavoring agent may be employed in either liquid form and/or dried form. When employed in the latter form, suitable drying means such as spray drying the oil may be used. Alternatively, the flavoring agent may be absorbed onto water soluble materials, such as cellulose, starch, sugar, maltodextrin, gum arabic and so forth or may be encapsulated. The actual techniques for preparing such dried forms are well known and do not constitute a part of this invention.

The flavoring agents of the present invention may be used in many distinct physical forms well known in the art to provide an initial burst of flavor and/or a prolonged sensation of flavor. Without being limited thereto, such physical forms include free forms, such as spray dried, powdered, and beaded forms, and encapsulated forms, and mixtures thereof.

Encapsulated delivery systems for flavoring agents or sweetening agents comprise a hydrophobic matrix of fat or wax surrounding a sweetening agent or flavoring agent core. The fats may be selected from any number of conventional materials such as fatty acids, glycerides or polyglycerol esters, sorbitol esters, and mixtures thereof. Examples of fatty acids include hydrogenated and partially hydrogenated vegetable oils such as palm oil, palm kernel oil, peanut oil, rapeseed oil, rice bran oil, soybean oil, cottonseed oil, sunflower oil, safflower oil, and mixtures thereof. Glycerides which are useful include monoglycerides, diglycerides, and triglycerides.

Waxes useful may be chosen from the group consisting of natural and synthetic waxes, and mixtures thereof. Non-limiting examples include paraffin wax, petrolatum, carbowax, microcrystalline wax, beeswax, carnauba wax, candellila wax, lanolin, bayberry wax, sugarcane wax, spermaceti wax, rice bran wax, and mixtures thereof.

The fats and waxes may be use individually or in combination in amounts varying from about 10 to about 70%, and preferably in amounts from about 40 to about 58%, by weight of the encapsulated system. When used in combination, the fat and wax are preferably present in a ratio from about 70:10 to 85:15, respectively.

Typical encapsulated flavoring agent or sweetening agent delivery systems are disclosed in United States patents no. 4,597,970 and 4,722,845, which disclosures are incorporated herein by reference.

The amount of flavoring agent employed herein is normally a matter of preference subject to such factors as the type of final chewing gum composition, the individual flavor, the gum base employed, and the strength of flavor desired. Thus, the amount of flavoring may be varied in order to obtain the result desired in the final product and such variations are within the capabilities of those skilled in the art without the need for undue experimentation. In gum compositions, the flavoring agent is generally present in amounts from about 0.02% to about 5%, and preferably from about 0.1% to about 2%, and more preferably, from, about 0.8% to about 1.8%, by weight of the chewing gum composition.

The coloring agents useful in the present invention are used in amounts effective to produce the desired color. These coloring agents include pigments which may be incorporated in amounts up to about 6%, by weight of the gum composition. A preferred pigment, titanium dioxide, may be incorporated in amounts up to about 2%, and preferably less than about 1%, by weight of the gum composition. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p -sulfoniumbenzylamino) diphenylmethylene]-[1-(N-ethyl -N-p -sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884, which text is incorporated herein by reference.

The chewing gum compositions may also optionally contain an edible food material which is capable of being formed into spherical particles having microporous channels. The particles or microporous buds (beads) preferably have low bulk densities in the range from about 3.0 lb./ft$^3$ to about 8.0 lb./ft$^3$, and preferably from about 3.0 lb./ft$^3$ to about 6.0 lb./ft$^3$. The fine, porous spherical buds immediately absorb moisture from saliva when the chewing gum is masticated. The microporous buds then swell and impart a juiciness attributable to the gum. Microporous buds, not having low bulk densities, coupled with microporous channels have been found not suitable for use. Such buds have been found to quickly release the flavoring agent from the composition and fail to sustain flavor and sweetness duration.

Microporous buds may be produced from a wide range of materials. Illustrative non-limiting examples include carbohydrates such as dextrins, starch, pectin, algin, methyl cellulose, carboxymethyl cellulose, carboxymethyl amylose, carboxymethyl amylopectin, dextrose, fructose, maltose, lactose, dextrins, natural gums, and the like, and mixtures thereof. Exemplary non-limiting natural gums include tragacanth, acacia, arabic, locus bean, caraya, carrageen, and the like, and mixtures thereof.

Such microporous buds are commercially available or may be prepared by spray drying previously expanded buds in a heated zone. The preparation of such buds is described more fully in United States patent no. 4,108,593 to Cohan, which reference is incorporated herein by reference. In general, such processes involve spraying a flowable composition in the presence of a blowing agent, such as ammonium bicarbonate, to form buds, subjecting the buds to a heated zone to expand the buds by expanding the gases within the buds, and cooling the resulting expanded buds to stop further expansion and to control bulk density.

In a preferred embodiment, the microporous bead is a maltodextrin. This maltodextrin is distinct from known maltodextrins which have distinct particle sizes and are void of a microporous channel structure. Such conventional maltodextrins or corn syrup solids have bulk densities from about 15 lb./ft.$^3$ to about 46 lb./ft.$^3$ and dextrose equivalence values (D.E.) from about 7 to about 38. Such materials are unsuitable for use in the present invention without microporous particles. Such maltodextrins may be used in the instant formulations in addition to the microporous bead.

The spherical particles may be employed in the chewing gum composition in amounts from about 0.1% to about 12%, and preferably from about 0.5% to about 6%, by weight of the final chewing gum composition. Quantities less than about 0.1% generally do not provide satisfactory enhanced flavor and sweetness perception and quantities higher than about 12% generally do not provide a pleasing flavor and sweetness release.

Suitable oils and fats usable in gum compositions include partially hydrogenated vegetable or animal fats, such as coconut oil, palm kernel oil, beef tallow, lard, and the like. These ingredients when used are generally present in amounts up to about 7%, and preferably up to about 3.5%, by weight of the gum composition.

In accordance with this invention, effective amounts of pulverized fructose having a particle size capable of passing through a 60 mesh screen may be admixed into the chewing gum composition. The exact amount of pulverized fructose employed is normally a matter of preference subject to such factors as the particular type of gum composition being prepared, the type of gum base employed, the type of flavor employed and the intensity of sweetness desired. Thus, the amount of pulverized fructose may be varied in order to obtain the result desired in the final product and such variations are within the capabilities of those skilled in the art without the need for undue experimentation. In general, the amount of pulverized fructose present in a anhydrous chewing gum composition containing traditional quantities of a gum base (gum base present in an amount up to about 55%) will be from about 40% to about 90%, more preferably from about 45% to about 85%, and most preferably from about 55% to about 85%, by weight of the final chewing gum composition. The amount of pulverized fructose present in a reduced-calorie anhydrous chewing gum composition containing a major quantity of a gum base having an enhanced hydrophilic character (gum base present in an amount from about 55% to about 90%) will be less than about 40%, preferably from about 5% to about 40%, and most preferably from about 5% to about 25%, by weight of the final chewing gum composition.

The present invention also includes a method for preparing the improved chewing gum compositions, including both chewing gum and bubble gum formulations. The chewing gum compositions may be prepared using standard techniques and equipment known to those skilled in the art. The apparatus useful in accordance with the present invention comprises mixing and heating apparatus well known in the chewing gum manufacturing arts, and therefore the selection of the specific apparatus will be apparent to the artisan.

The compositions may be prepared by admixing melted gum base with a quantity of the pulverized fructose until a uniform homogeneous mass is formed. The remaining quantity of fructose and flavoring agent are sequentially admixed, with each addition step followed by mixing until a uniform homogeneous mass is formed. The ratio of gum base to bulk sweetening agent will be from about 1:15 to about 3:1. If a softening agent is used, the melted gum base is admixed with the softening agent until a uniform homogeneous mass is formed prior to admixing the initial quantity of fructose. Other ingredients will usually be incorporated into the composition as dictated by the nature of the desired composition as well known by those having ordinary skill in the art. The mass is then extruded and formed into suitable chewing gum pieces. The ultimate chewing gum compositions are readily prepared using methods generally known in the food technology and chewing gum arts.

For example, the gum base is heated to a temperature sufficiently high to soften the base without adversely effecting the physical and chemical make up of the base. The optimal temperatures utilized may vary depending upon the composition of the gum base used, but such temperatures are readily determined by those skilled in the art without undue experimentation. The gum base is conventionally melted at temperatures that range from about 60° C. to about 120° C. for a period of time sufficient to render the base molten. The gum base may be heated under these conditions for a period of about thirty minutes just prior to being admixed incrementally with the remaining ingredients of the gum composition such as the inventive sweetening agent composition, plasticizer, the softener, the bulking agent, and/or fillers, coloring agents and flavoring agents to plasticize the blend as well as to modulate the hardness, viscoelasticity and formability of the base. Mixing is continued until a uniform mixture of gum composition is obtained. Thereafter the gum composition mixture may be formed into desirable chewing gum shapes.

In a preferred embodiment, the invention is directed at a method for preparing an anhydrous chewing gum composition which comprises (a) admixing a melted gum base with a first quantity of bulk sweetening agent comprising pulverized fructose having a particle size capable of passing through a 60 mesh screen until a uniform mixture is formed, wherein the gum base and the bulk sweetening agent are substantially anhydrous, (b) admixing a second quantity of bulk sweetening agent comprising pulverized fructose having a particle size capable of passing through a 60 mesh screen to the uniform mixture of step (a) until a uniform mixture is formed, wherein the total weight ratio of gum base to bulk sweetening agent is from about 1:15 to about 3:1, (c) admixing a flavoring agent to the uniform mixture of step (b) until a uniform mixture is obtained, and (d) forming the uniform mixture of step (c) into chewing gum pieces.

In another embodiment, the invention is directed at a method for sweetening a chewing gum composition which comprises incorporating into the gum composition an effective amount of a bulk sweetening agent comprising pulverized fructose having a particle size capable of passing through a 60 mesh screen which comprises the steps of (a) admixing a melted gum base with a first quantity of bulk sweetening agent comprising pulverized fructose having a particle size capable of passing through a 60 mesh screen until a uniform mixture is formed, wherein the gum base and the bulk sweetening agent are substantially anhydrous, (b) admixing a second quantity of bulk sweetening agent comprising pulverized fructose having a particle size capable of passing through a 60 mesh screen to the uniform mixture of step (a) until a uniform mixture is formed, wherein the total weight ratio of gum base to bulk sweetening agent is from about 1:15 to about 3:1, (c) admixing a flavoring agent to the uniform mixture of step (b) until a uniform mixture is obtained, and (d) forming the uniform mixture of step (c) into chewing gum pieces.

The present invention is further illustrated by the following Examples which are not intended to limit the effective scope of the claims. All parts and percentages in the Examples and throughout the specification and claims are by weight of the final composition unless otherwise specified.

## EXAMPLES 1-2

These Examples demonstrate the preparation of anhydrous fructose sweetened chewing gum compositions containing traditional quantities of a gum base according to the present invention.

The chewing gums of Examples 1 and 2 were prepared having the compositions the set out in Table 2.

TABLE 2

| FRUCTOSE SWEETENED GUM COMPOSITIONS | | |
|---|---|---|
| EXAMPLE | 1 | 2 |
| INGREDIENT | (Percent by Weight) | |
| Gum base | 14.60 | 14.60 |
| Fructose (powder) | 80.00 | 75.00 |
| Flavor | 1.10 | 1.10 |
| Softener | 4.3 | 4.3 |
| Micropore buds | - | 5.00 |

An expert sensory chew panel having experience in the organoleptic evaluation of ingestible products, including chewing gums, evaluated the relative sweetness intensity of the chewing gum compositions of Examples 1 and 2, at 30 seconds, 2 minutes, 6 minutes, 10 minutes and 15 minutes (on a scale of 0-100, 0 being not sweet, and 100 being very sweet) in random order and the findings were pooled and averaged. The chewing gum compositions of Examples 1 and 2 were found to have good upfront sweetness and clean taste.

## EXAMPLES 3-5

These Examples demonstrate the preparation of anhydrous fructose sweetened chewing gum compositions containing a major quantity of a gum base having an enhanced hydrophilic character and an intense sweetener according to the present invention.

The chewing gums of Examples 3, 4 and 5 (control) were prepared having the compositions the set out in Table 3.

TABLE 3

| FRUCTOSE SWEETENED GUM COMPOSITIONS | | | |
|---|---|---|---|
| EXAMPLE | 3 | 4 | 5 |
| INGREDIENT | (Percent by Weight) | | |
| Gum base | 82.44 | 72.44 | 82.44 |
| Fructose (powder) | 10.00 | 20.00 | ----- |
| Sugar | ----- | ----- | 10.00 |
| Flavor | 2.4 | 2.4 | 2.4 |
| Softener | 4.2 | 4.2 | 4.2 |
| Intense Sweetener | 0.96 | 0.96 | 0.96 |

An expert sensory chew panel having experience in the organoleptic evaluation of ingestible products, including chewing gums, evaluated the relative sweetness intensity of the chewing gum compositions of Examples 3, 4 and 5 at 30 seconds, 2 minutes, 6 minutes, 10 minutes and 15 minutes (on a scale of 0-100, 0 being not sweet, and 100 being very sweet) in random order and the findings were pooled and averaged. The findings are graphically depicted in Figure 1, where sweetness intensity is plotted versus chew out time.

Figure 1 shows that the chewing gum composition of example 3 had good upfront sweetness, a firm chew, clean taste, a high sweetness level at 6 minutes and a sweetness which lasted up to 10 minutes. The chewing gum composition of example 4 had good upfront sweetness, a slightly tight chew, clean taste, a high sweetness level at 6 minutes and a sweetness which lasted up to 10 minutes. The chewing gum composition of example 5 had low upfront sweetness, a slightly tight chew, a taste not as clean as in the (fructose) gums of examples 3 and 4, a peak sweetness level at 6 minutes (but not as sweet as the gums of examples 3 and 4) and a sweetness which lasted up to 10 minutes.

EXAMPLES 6-8

These Examples demonstrate the preparation of anhydrous fructose sweetened chewing gum compositions containing a major quantity of a gum base having an enhanced hydrophilic character with no intense sweetener according to the present invention.

The chewing gums of Examples 6, 7 and 8 (control) were prepared having the compositions the set out in Table 4.

TABLE 4

| FRUCTOSE SWEETENED GUM COMPOSITIONS | | | |
|---|---|---|---|
| EXAMPLE . | 6 | 7 | 8 |
| INGREDIENT | (Percent by Weight) | | |
| Gum base | 83.40 | 73.40 | 93.40 |
| Fructose (powder) | 10.00 | 20.00 | ----- |
| Sugar | ----- | ----- | 10.00 |
| Flavor | 2.4 | 2.4 | 2.4 |
| Softener | 4.2 | 4.2 | 4.2 |

An expert sensory chew panel having experience in the organoleptic evaluation of ingestible products, including chewing gums, evaluated the relative sweetness intensity of the chewing gum compositions of Examples 6, 7 and 8 at 30 seconds, 2 minutes, 6 minutes, 10 minutes and 15 minutes (on a scale of 0-100, 0 being not sweet, and 100 being very sweet) in random order and the findings were pooled and averaged.

The chewing gum composition of example 6 had good upfront sweetness, a firm chew, clean taste, and a sweetness which lasted up to 4 minutes. The chewing gum composition of example 7 had good upfront sweetness, a slightly tight chew, clean taste, a sweetness which lasted up to 4 minutes. The chewing gum composition of example 8 had low upfront sweetness, a slightly tight chew, a taste not as clean as in the (fructose) gums of examples 6 and 7, and a sweetness which lasted up to 4 minutes.

The invention being thus described, it will be obvious that the same may be varied in many ways. Such variations are not to be regarded as a departure from the spirit and scope of the invention and all such modifications are intended to be included within the scope of the following claims.

**Claims**

1. An anhydrous chewing gum composition which comprises in percentages by weight of the chewing gum composition:
   (a) a gum base present in an amount up to 55%;
   (b) a bulk sweetening agent comprising pulverized fructose having a particle size capable of passing through a 250 micron (60 mesh) screen, present in an amount from 35% to 90%; and
   (c) an effective amount of a flavouring agent.
2. A chewing gum composition according to claim 1, wherein the gum base is present in an amount from 10% to 40% preferably from 10% to 30%, by weight of the chewing gum composition.
3. A chewing gum composition according to claim 1 or 2, wherein the gum base is an elastomer selected from chicle, natural rubber, crow gum, nispero, rosidinha, jelutong, perillo, niger gutta, tunu, balata, gutta percha, lechi capsi, sorva, gutta kay, styrene-butadiene copolymers, polyisobutylene, isobutylene-isoprene

EP 0 420 411 A1

copolymers, polyethylene, and mixtures thereof.

4. A chewing gum composition according to claim 3, wherein the gum base also includes a polyvinyl acetate polymer.

5. A chewing gum composition according to any preceding claim, wherein the bulking agent is present in an amount from 45% to 85%, preferably from 55% to 85%, by weight of the chewing gum composition.

6. A chewing gum composition according to any preceding claim, wherein the flavouring agent is present in an amount from 0.02% to 5%, by weight of the chewing gum composition.

7. An anhydrous reduced-calorie chewing gum composition which comprises in percentages by weight of the chewing gum composition:

(a) a gum base having an enhanced hydrophilic character present in an amount from 55% to 90%;

(b) a bulk sweetening agent comprising pulverized fructose having a particle size capable of passing through a 250 micron (60 mesh) screen, present in an amount up to about 45%; and

(c) an effective amount of a flavouring agent.

8. A chewing gum composition according to claim 7, wherein the gum base is present in an amount from 60% to 90%, preferably from 65% to 85%, by weight of the chewing gum composition.

9. A chewing gum composition according to claim 7 or 8, wherein the gum base comprises a polyvinyl acetate polymer and an elastomer selected from chicle, natural rubber, crown gum, nispero, rosidinha, jelutong, perillo, niger gutta, tunu, balata, gutta percha, lechi capsi, sorva, gutta kay, styrene-butadiene copolymers, polyisobutylene, isobutylene-isoprene copolymers, polyethylene, and mixtures thereof.

10. A chewing gum composition according to claim 7, 8 or 9, wherein the gum base comprises, in percentages by weight of the gum base:

(a) an elastomer present in an amount from 0.5% to 20%,

(b) a medium molecular weight polyvinyl acetate polymer having a molecular weight from 35,000 to 55,000, present in an amount from 10% to 25%,

(c) an acetylated monoglyceride present in an amount from 4.5% to 10%,

(d) a wax having a melting point below $60^\circ$ C., present in an amount from 6% to 10%, and

(e) a material selected from elastomer solvents, emulsifiers, plasticizers, fillers, and mixtures thereof, present in an amount to bring the total amount of gum base to 100%.

11. A chewing gum composition according to any one of claims 7 to 10, wherein the bulking agent is present in an amount from 5% to 40%, preferably 5% to 25%, by weight of the chewing gum composition.

12. A chewing gum composition according to any one of claims 7 to 11, wherein the flavouring agent is present in an amount from 0.02% to 5%, by weight of the chewing gum composition.

13. A chewing gum composition according to any one of claims 7 to 12, further comprising an effective amount of an intense sweetening agent.

14. A process for preparing an anhydrous chewing gum composition which comprises:

(a) admixing a melted gum base with a first quantity of a bulk sweetening agent comprising pulverized fructose having a particle size capable of passing through a 250 micron (60 mesh) screen until a uniform mixture is formed, wherein the gum base and the bulk sweetening agent are substantially anhydrous;

(b) admixing a second quantity of bulk sweetening agent comprising pulverized fructose having a particle size capable of passing through a 250 micron (60 mesh) screen to the uniform mixture of step (a) until a uniform mixture is formed, wherein the total weight ratio of gum base to bulk sweetening agent is from 1:15 to 3:1;

(c) admixing an effective amount of a flavouring agent to the uniform mixture of step (b) until a uniform mixture is obtained; and

(d) forming the uniform mixture of step (c) into chewing gum pieces.

15. A process according to claim 14, wherein the gum base is present in an amount up to 55%, by weight of the chewing gum composition.

16. A process according to claim 14, wherein the gum base is present in an amount from 55% to 90%, by weight of the chewing gum composition.

17. A process according to claim 18, wherein the bulking agent is present in an amount of from 35% to 90%, by weight of the chewing gum composition.

18. A process according to claim 18, wherein the bulking agent is present in an amount of up to 45%, by weight of the chewing gum composition.

Claims for the following Contracting State: ES

1. A process for producing an anhydrous chewing gum composition, which process comprises blending in percentages by weight of the chewing gum composition the following components:

14

(a) a gum base present in an amount up to 55%;

(b) a bulk sweetening agent comprising pulverized fructose having a particle size capable of passing through a 250 micron (60 mesh) screen, present in an amount from 35% to 90%; and

(c) an effective amount of a flavouring agent.

2. A process according to claim 1, wherein the gum base is present in an amount from 10% to 40%, preferably from 10% to 30%, by weight of the chewing gum composition.

3. A process according to claim 1 or 2, wherein the gum base is an elastomer selected from chicle, natural rubber, crow gum, nispero, rosidinha, jelutong, perillo, niger gutta, tunu, balata, gutta percha, lechi capsi, sorva, gutta kay, styrene-butadiene copolymers, polyisobutylene, isobutylene-isoprene copolymers, polyethylene, and mixtures thereof.

4. A process according to claim 3, wherein the gum base also includes a polyvinyl acetate polymer.

5. A process according to any preceding claim, wherein the bulking agent is present in an amount from 45% to 85%, preferably from 55% to 85% by weight of the chewing gum composition.

6. A process according to any preceding claim, wherein the flavouring agent is present in an amount from 0.02% to 5%, by weight of the chewing gum composition.

7. A process for providing an anhydrous reduced-calorie chewing gum composition, which process comprises blending in percentages by weight of the chewing gum composition the following ingredients:

(a) a gum base having an enhanced hydrophilic character present in an amount from 55% to 90%;

(b) a bulk sweetening agent comprising pulverized fructose having a particle size capable of passing through a 250 micron (60 mesh) screen, present in an amount up to about 45%; and

(c) an effective amount of a flavouring agent.

8. A process according to claim 7, wherein the gum base is present in an amount from 60% to 90%, preferably from 65% to 85%, by weight of the chewing gum composition.

9. A process according to claim 7 or 8, wherein the gum base comprises a polyvinyl acetate polymer and an elastomer selected from chicle, natural rubber, crown gum, nispero, rosidinha, jelutong, perillo, niger gutta, tunu, balata, gutta percha, lechi capsi, sorva, gutta kay, styrene-butadiene copolymers, polyisobutylene, isobutylene-isoprene copolymers, polyethylene, and mixtures thereof.

10. A process according to claim 7, 8 or 9, wherein the gum base comprises, in percentages by weight of the gum base:

(a) an elastomer present in an amount from 0.5% to 20%,

(b) a medium molecular weight polyvinyl acetate polymer having a molecular weight from 35,000 to 55,000, present in an amount from 10% to 25%,

(c) an acetylated monoglyceride present in an amount from 4.5% to 10%,

(d) a wax having a melting point below 60°C., present in an amount from 6% to 10%, and

(e) a material selected from elastomer solvents, emulsifiers, plasticizers, fillers, and mixtures thereof, present in an amount to bring the total amount of gum base to 100%.

11. A process according to any one of claims 7 to 10, wherein the bulking agent is present in an amount from 5% to 40%, preferably 5% to 25%, by weight of the chewing gum composition.

12. A process according to any one of claims 7 to 11, wherein the flavouring agent is present in an amount from 0.02% to 5%, by weight of the chewing gum composition.

13. A process according to any one of claims 7 to 12, further comprising an effective amount of an intense sweetening agent.

14. A process for preparing an anhydrous chewing gum composition which comprises:

(a) admixing a melted gum base with a first quantity of a bulk sweetening agent comprising pulverized fructose having a particle size capable of passing through a 250 micron (60 mesh) screen until a uniform mixture is formed, wherein the gum base and the bulk sweetening agent are substantially anhydrous;

(b) admixing a second quantity of bulk sweetening agent comprising pulverized fructose having a particle size capable of passing through a 250 micron (60 mesh) screen to the uniform mixture of step (a) until a uniform mixture is formed, wherein the total weight ratio of gum base to bulk sweetening agent is from 1:15 to 3:1;

(c) admixing an effective amount of a flavouring agent to the uniform mixture of step (b) until a uniform mixture is obtained; and

(d) forming the uniform mixture of step (c) into chewing gum pieces.

15. A process according to claim 14, wherein the gum base is present in an amount up to 55%, by weight of the chewing gum composition.

16. A process according to claim 14, wherein the gum base is present in an amount from 55% to 90%, by weight of the chewing gum composition.

17. A process according to claim 18, wherein the bulking agent is present in an amount of from 35% to 90%, by weight of the chewing gum composition.

18. A process according to claim 18, wherein the bulking agent is present in an amount of up to 45%, by weight of the chewing gum composition.

FIG-1

ANHYDROUS HIGH BASE GUMS WITH FRUCTOSE
SWEETNESS INTENSITY

—●— EXAMPLE 5 (SUGAR)     —+— EXAMPLE 3 (FRUCTOSE 10%)

—*— EXAMPLE 4 (FRUCTOSE 20%)

PEPPERMINT FLAVOR

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,D X | US-A-4 900 563 (S.R. CHERUKURI et al.) * abstract; column 9, table 2; claims 1-15 * | 1-3,5-9 ,12-14 | A 23 G 3/30 |
| D,A | US-A-4 698 223 (G. PERFETTI et al.) * abstract; claims 1-10 * | 1-6,8- 10 | |
| P,A | EP-A-0 372 695 (WARNER-LAMBERT CO) * claims 1-15 * | 1,3,4 | |
| A | US-A-4 409 244 (S.R. CHERUKURI et al.) * claims 1-5 * | 1-3 | |
| A | PATENT ABSTRACTS OF JAPAN vol. 7, no. 201 (C-184)(1346), 6th September 1983; & JP - A - 58101649 (ETSUO MORITA) 16.06.1983 | 1 | |

TECHNICAL FIELDS
SEARCHED (Int. Cl.5)

A 23 G 3/00

The present search report has been drawn up for all claims

| Place of search | Date of completion of the search | Examiner |
|---|---|---|
| BERLIN | 12-12-1990 | SCHULTZE D |

EPO FORM 1503 03.82 (P0401)